# EUROPEAN PATENT APPLICATION

(11) **EP 4 495 802 A1**
(43) Date of publication of application: **22.01.2025**
(21) Application number: 24189674.5
(22) Date of filing: 19.07.2024
(51) Int. Cl.: G06F 16/58

(54) **CONTENT GENERATION APPARATUS IN WHICH HISTORY INFORMATION CAN BE GIVEN, CONTROL METHOD THEREFOR, AND STORAGE MEDIUM**

(30) Priority: 21.07.2023 JP 2023119089
(71) Applicant: CANON KABUSHIKI KAISHA, Tokyo 146-8501 (JP)
(72) Inventor: UENO, Daiyu, Ohta-ku, Tokyo, 146-8501 (JP)
(74) Representative: TBK

(57) **Abstract**

A content generation apparatus capable of allowing a user to select an image file to be used according to a purpose. In the content generation apparatus, one or more controllers function to generate a content, generate metadata including original comparison information for grasping a change from a generation time point of a content file including the content, generate a hash value on a basis of the metadata including the original comparison information and of the content, generate a first content file which includes the content, the metadata including the original comparison information, and the hash value, and generate a second content file which includes the content and does not include the original comparison information.

## Description

### BACKGROUND OF THE INVENTION

### Field of the Invention

The present invention relates to a content generation apparatus in which history information can be given, a control method therefor, and a storage medium.

### Description of the Related Art

In recent years, information sharing via the Internet has been actively performed, and anyone can disclose and transmit various information to an unspecified number of people. In addition, various processing can be performed on digital image. In such a situation, there is a possibility that information is transmitted from an unreliable source or the disclosed information is illegally falsified, and hence a technology for guaranteeing authenticity of information to be disclosed and transmitted is required.

As a technique for guaranteeing the authenticity of information to be disclosed and transmitted, for example, a technique disclosed in Japanese Laid-Open Patent Publication (kokai) No. 2008-5421 has been proposed. In Japanese Laid-Open Patent Publication (kokai) No. 2008-5421, a digital camera has a function of assigning a hash value of data obtained by combining image data and additional information to an image file including image data obtained by shooting and the additional information such as shooting date and time. As a result, it is possible to determine, by using the hash value assigned to the image file, whether or not the image data or the additional information included in the image file has been changed from the time of shooting.

In addition, in order to authenticate a source, a background, and a history of an image file, there has been proposed a technique of assigning history information indicating an edited content performed on the image file to the image file (See Document [1] (Coalition for Content Provenance and Authenticity (C2PA), "C2PA Specifications", <Technical Specifications Version 1.2>, [online], November 3, 2022, [searched on January 23, 2023], Internet <URL:https://c2pa.org/specifications/specifications/1.2/specs/C2PA_ Specificatio n.html>)). For example, at the time of shooting, additional information (for example, EXIF information) such as a shooting place, a thumbnail image obtained by reducing image data at the time of shooting, and the like are assigned to the image file as the history information. Further, every time the image file is edited, new history information including the edited content is added. From the history information included in the image file, a user can grasp how the image data and the additional information have been edited after the time of shooting.

Meanwhile, since the purpose of use of the image file is different for each user, the user may feel inconvenient when the image file including the history information as described above is generated. For example, in a case where the image file is disclosed to a third party, the user may perform, from the viewpoint of protecting privacy instead of malicious falsification, mosaic processing on a face of a person included in the image data and/or delete information on the shooting place included in the additional information. Even in a case where the image file is edited for the purpose of anonymization as described above, with the technology of the above-described document [1], the history information at the time of shooting, for example, the information of the shooting place and/or the thumbnail image at the time of shooting remains, and privacy is therefore not protected. For the user who uses the image file in such manner, it is preferable that the image file not including the history information be provided. On the other hand, for a user who wants to grasp how the image data and the additional information have been edited after the time of shooting, it is preferable to provide an image file including the history information. As described above, the appropriate configuration of the image file varies depending on the purpose of use; however, the user cannot select the image file to be used according to the purpose with the prior art.

### SUMMARY OF THE INVENTION

The present invention provides a content generation apparatus capable of allowing a user to select an image file to be used according to a purpose, a control method therefor, and a storage medium.

Accordingly, a first aspect of the present invention provides a content generation apparatus as specified in claims 1 to 15. Accordingly, a second aspect of the present invention provides a control method of a content generation apparatus as specified in claim 16. Accordingly, a third aspect of the present invention provides a computer-readable non-transitory storage medium storing a program for executing a method for controlling a content generation apparatus as specified in claim 17.

According to the present invention, in the content generation apparatus, the user can select the image file to be used according to the purpose.

Further features of the present invention will become apparent from the following description of exemplary embodiments with reference to the attached drawings.

### BRIEF DESCRIPTION OF THE DRAWINGS

FIGS. 1A and 1B are external views of a digital camera as a content generation apparatus according to the present embodiment.
FIG. 2 is a block diagram showing a configuration example of the digital camera in FIGS. 1A and 1B.
FIGS. 3A and 3B are a flowchart showing a procedure of shooting control processing executed by the digital camera in FIGS. 1A and 1B.
FIGS. 4A to 4G are diagrams showing examples of screens displayed on a display part in FIG. 1B.
FIGS. 5A and 5B are a flowchart showing a procedure of shooting processing in S317 of FIG. 3B.
FIGS. 6A to 6C are diagrams showing configuration examples of image files generated by the digital camera in FIGS. 1A and 1B.
FIG. 7 is a table summarizing image files to be generated in the present embodiment for each condition.
FIGS. 8A and 8B are a flowchart showing a procedure of reproduction processing in S318 of FIG. 3B.
FIGS. 9A to 9C are diagrams showing examples of screens displayed on the display part in FIG. 1B.

### DESCRIPTION OF THE EMBODIMENTS

The present invention will now be described in detail below with reference to the accompanying drawings showing embodiments thereof. Note that the following embodiments do not limit the invention according to the claims. Although a plurality of features is described in the embodiments, all of the features are not necessarily essential to the invention, and the features may be arbitrarily combined.

Hereinafter, an embodiment in which a content generation apparatus according to the present invention is applied to a digital camera capable of shooting a still image and recording a moving image will be described in detail with reference to the drawings.

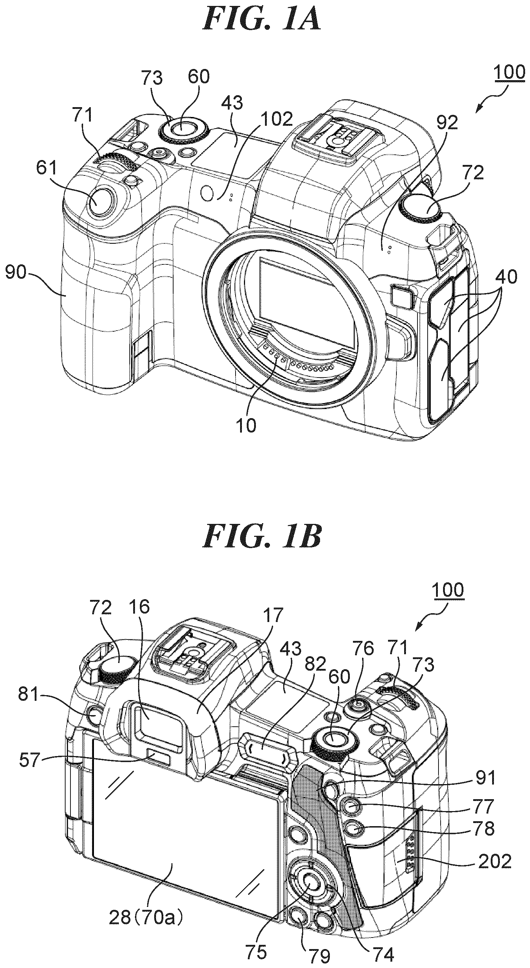

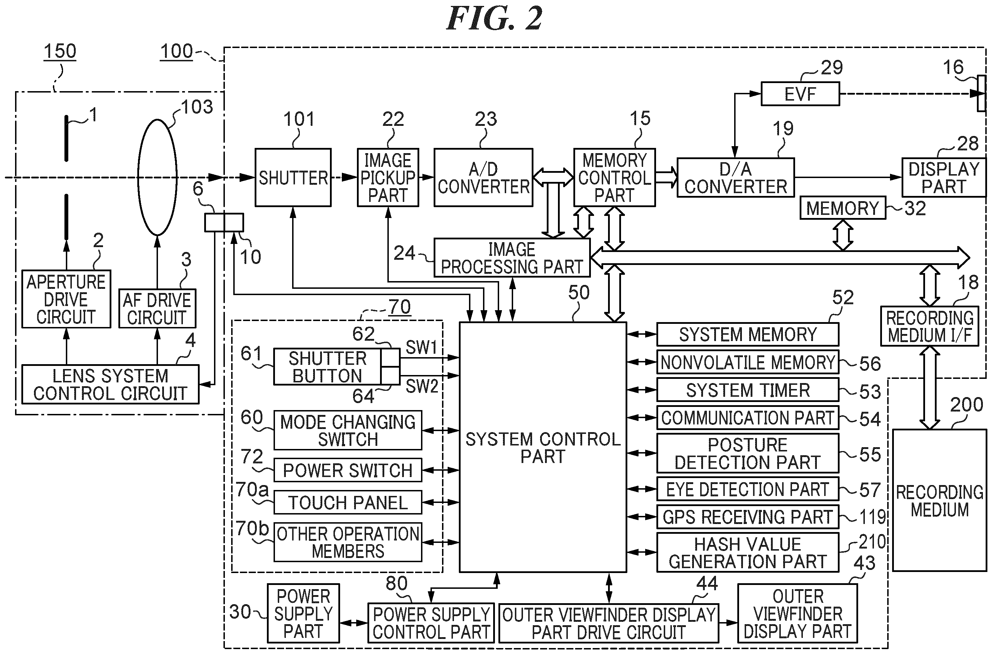

First, with reference to FIGS. 1A, 1B, and 2, a configuration and a function of a digital camera 100 as a content generation apparatus according to the present embodiment will be described.

FIG. 1A is a front perspective view of the digital camera 100 from which a lens unit 150 is removed. FIG. 1B is a rear perspective view of the digital camera 100.

In FIG. 1B, the display part 28 is an outer viewfinder display part that displays an image and various types of information, and is a display device such as an LCD provided on a back surface of a camera body. The display part 28 is provided with a touch panel 70a. The touch panel 70a is a touch operation member capable of detecting contact (touch operation) on a display surface (touch operation surface) of the display part 28.

The outer viewfinder display part 43 is a display part provided on an upper surface of the digital camera 100, and displays various setting values of the digital camera 100 such as setting values of a shutter speed and an aperture. The shutter button 61 is an operation member for performing a shooting instruction. A mode changing switch 60 is an operation member for switching various modes. A terminal cover 40 is a cover that protects a connector (not shown) for a connection cable and/or the like that connects the digital camera 100 to an external device.

A main electronic dial 71 is a rotation operation member. Setting values such as the shutter speed and the aperture can be changed or other operation are performed, by turning the main electronic dial 71. A power switch 72 is an operation member that switches on and off of power of the digital camera 100. A sub-electronic dial 73 is a rotation operation member. By turning the sub-electronic dial 73, a selection frame (cursor) displayed on the display part 28 or the like can be moved, a displayed image can be fed, or the like. A four-direction key 74 is configured to be able to be pressed at upper, lower, left, and right portions thereof, and can execute processing corresponding to the each pressed portion of the four-direction key 74. A SET button 75 is a push button, and is mainly used to determine an item to be selected.

A moving image button 76 is used for an instruction to start/stop moving image shooting (recording). An AE lock button 77 is a push button. An exposure state can be fixed by pressing the AE lock button 77 in a shooting standby state. An enlargement button 78 is an operation button for switching ON/OFF of an enlargement mode in a live view display (LV display) of a shooting mode. By turning on the enlargement mode and then operating the main electronic dial 71, the live view image (LV image) can be enlarged/reduced. In a reproduction mode, the enlargement button 78 functions as an operation button for enlarging a reproduced image or increasing an enlargement ratio thereof.

A reproduction button 79 is an operation button for switching between the shooting mode and the reproduction mode. By pressing the reproduction button 79 during the shooting mode, the mode can be shifted to the reproduction mode, and the latest image among the images recorded on a recording medium 200 (FIG. 2) can be displayed on the display part 28. A menu button 81 is a push button used to perform an instruction operation for displaying a menu screen. When the menu button 81 is pressed, a menu screen through which various settings can be made is displayed on the display part 28. The user can intuitively perform various settings using the menu screen displayed on the display part 28 and the four-direction key 74 and/or the SET button 75.

A touch bar 82 (multi-function bar: M-Fn bar) is a linear-shaped touch operation member (latch sensor) capable of receiving a touch operation. The touch bar 82 is arranged at a position on which a user (photographer) can perform a touch operation (touchable) on the touch bar 82 with the user's thumb of the right hand while the user grips a grip part 90 with the user's right hand (with little finger, ring finger, and middle finger of right hand) so as to be able to press the shutter button 61 with the index finger of the right hand. That is, the touch bar 82 is disposed at a position where the user can operate the touch bar 82 in a holding state (shooting posture), in which the user can press the shutter button 61 at any time while user approach user's eye to an eyepiece part 16 and look through the finder. The touch bar 82 is a reception part capable of receiving a tap operation on the touch bar 82 (for example, an operation of touching the touch bar 82 with a finger and taking the finger off the touch bar 82 within a predetermined period without shifting the finger), a slide operation to the left and right (for example, an operation of touching touch bar 82 with a finger and then moving a touch position without taking the finger off the touch bar 82), and the like. The touch bar 82 is an operation member different from the touch panel 70a, and does not have a display function.

A communication terminal 10 is a communication terminal for the digital camera 100 to communicate with the lens unit 150 (FIG. 2). The eyepiece part 16 is an eyepiece part of an eyepiece finder 17 (viewing-type finder). The user can visually recognize a video (image) displayed on an electronic view finder (EVF) 29 (FIG. 2) inside through the eyepiece part 16. An eye detection part 57 is an eye-approach detection sensor that detects whether or not an eye of a user (photographer) is approaching (close to) the eyepiece part 16. A lid 202 is a lid of a slot for storing the recording medium 200 (FIG. 2).

The grip part 90 is a holding part having a shape that is easily gripped by the user's right hand when the user holds the digital camera 100. The shutter button 61 and the main electronic dial 71 are arranged at positions that can be operated by the index finger of the right hand in a state where the user holds the digital camera 100 by gripping the grip part 90 with the little finger, the ring finger, and the middle finger of the right hand. The sub-electronic dial 73 and touch bar 82 are disposed at positions that can be operated by the thumb of the right hand, in a state where the user holds the digital camera 100 in the similar way to the above way. A thumb rest part 91 (thumb standby position) is a grip member provided on the back side of the digital camera 100 at a position where the thumb of the right hand gripping the grip part 90 is easily placed when no operation member is operated. The thumb rest part 91 is formed of a rubber member or the like which enhances a holding strength (grip feeling).

FIG. 2 is a block diagram showing a configuration example of the digital camera 100 in FIGS. 1A and 1B. Referring to FIG. 2, the lens unit 150 is a lens unit equipped with interchangeable taking lenses, and is detachable from the digital camera 100. The lens 103 is usually composed of a plurality of lenses; however, only one lens is shown in a simplified manner in FIG. 2. The communication terminal 6 is a communication terminal for the lens unit 150 to communicate with the digital camera 100 via the communication terminal 10 of the digital camera 100. The communication terminal 10 is a communication terminal for the digital camera 100 to communicate with the lens unit 150. The lens unit 150 communicates with a system control part 50 of the digital camera 100 via the communication terminal 6 and the communication terminal 10. In the lens unit 150, a lens system control circuit 4 inside the lens unit 150 controls the aperture 1 via an aperture drive circuit 2. The lens unit 150 is focused by displacing the position of the lens 103 via an AF drive circuit 3 by the lens system control circuit 4.

In the digital camera 100, the shutter 101 is a focal plane shutter capable of freely controlling the exposure time of the image pickup part 22 under the control of the system control part 50.

The image pickup part 22 is an image sensor including an image pickup device such as a CCD or a CMOS that converts an optical image into an electric signal. Note that the image pickup part 22 may include an image pickup plane phase difference sensor that outputs defocus amount information to the system control part 50. The A/D converter 23 converts an analog signal output from the image pickup part 22 into a digital signal.

An image processing part 24 performs predetermined processing (resizing processing such as pixel interpolation and reduction, color conversion processing, and/or the like) on the data from the A/D converter 23 or on the data from a memory control part 15. Furthermore, the image processing part 24 performs predetermined calculation processing using the picked-up image data, and the system control part 50 performs exposure control and/or distance measurement control on the basis of the calculation result obtained by the image processing part 24. As a result, autofocus (AF) processing of a through the lens (TTL) method, automatic exposure (AE) processing, flash preliminary light emission (EF) processing, and/or the like are performed. The image processing part 24 further performs predetermined calculation processing using the picked-up image data, and performs automatic white balance (AWB) processing of the TTL method on the basis of the obtained calculation result.

Output data from the A/D converter 23 is written into the memory 32 via the image processing part 24 and the memory control part 15. Alternatively, the output data from the A/D converter 23 is written into the memory 32 via the memory control part 15 without via the image processing part 24. The memory 32 stores image data obtained by analog data obtained by the image pickup part 22 being converted into digital data by the A/D converter 23, and image data to be displayed on the display part 28 and/or the EVF 29. The memory 32 has a storage capacity sufficient to store a predetermined number of still images and/or a moving image and sound for a predetermined time.

The memory 32 also serves as a memory (video memory) for image display. A D/A converter 19 converts data for image display stored in the memory 32 into an analog signal and supplies the analog signal to the display part 28 and/or the EVF 29. The image data for image display written in the memory 32 is displayed on the display part 28 and/or the EVF 29 via the D/A converter 19. The display part 28 and/or the EVF 29 perform display according to the analog signal from the D/A converter 19. A digital signal generated by A/D conversion by the A/D converter 23 and accumulated in the memory 32 is converted into an analog signal by the D/A converter 19 and sequentially transferred to and displayed on the display part 28 and/or the EVF 29, whereby live view display (LV) can be performed. Hereinafter, the image displayed in the live view display is referred to as a "live view image (LV image)".

The system control part 50 is a control part including at least one processor and/or at least one circuit, and controls the entire digital camera 100. The system control part 50 is a processor and also a circuit. The system control part 50 implements each processing of the present embodiment described later by executing a program recorded in the nonvolatile memory 56. The system control part 50 also performs display control by controlling the memory 32, the D/A converter 19, the display part 28, the EVF 29, and the like.

The system memory 52 is, for example, a RAM. The system control part 50 develops, in the system memory 52, constants, variables, programs read from the nonvolatile memory 56, and the like, for the operation of the system control part 50.

The nonvolatile memory 56 is an electrically erasable/recordable memory, and is an EEPROM or the like. In the nonvolatile memory 56, constants, programs, and the like for operation of the system control part 50 are recorded. The program referred to herein is a program for executing processing of various flowcharts described later in the present embodiment.

A system timer 53 is a clocking part that measures time used for various types of control and measures time of a built-in clock.

A communication part 54 transmits and receives a video signal (or image signal) and an audio signal to and from an external device connected to the communication part 54 by a wireless or wired cable. The communication part 54 can also be connected to a wireless local area network (LAN) and the Internet. Furthermore, the communication part 54 can also communicate with the external device by Bluetooth (registered trademark) or Bluetooth Low Energy. The communication part 54 can transmit the image (including the LV image) picked up by the image pickup part 22 and the image recorded on the recording medium 200 to the external device, and can also receive, from the external device, various types of information such as image data and a moving image recording start instruction. Furthermore, when the communication part 54 receives a moving image recording start instruction from the external device, notification of the reception of the instruction can be provided to the user by a light emitting part 102 emitting light and/or by a speaker 92 making an electronic sound. Examples of the external device which communicates with the communication part 54 include a smartphone, a tablet terminal, and a desktop PC.

A posture detection part 55 detects the posture of the digital camera 100 with respect to the direction of gravity. On the basis of the posture detected by the posture detection part 55, it can be determined whether the image shot by the image pickup part 22 is an image shot by the user holding the digital camera 100 horizontally or vertically. The system control part 50 can add orientation information corresponding to the posture detected by the posture detection part 55 to the image file of the image picked up by the image pickup part 22, and can record the image, while rotating the image, according to the posture detected by the posture detection part 55. As the posture detection part 55, an acceleration sensor, a gyro sensor, or the like can be used. It is also possible to detect the movement (pan, tilt, lift, whether or not stand still, and the like) of the digital camera 100, when using an acceleration sensor or a gyro sensor which is the posture detection part 55.

The eye detection part 57 is a sensor that detects approach (eye-approach) and separation (eye separation) of an eye (object) with respect to the eyepiece part 16 of the eyepiece finder 17. The system control part 50 switches between display (display state) and non-display (non-display state) on the display part 28 and the EVF 29 according to the state detected by the eye detection part 57. More specifically, in at least the case of/that "in the shooting standby state, and the switching setting of the display destination is set as automatic switching", during the non-eye-approach(ing) state, the display part 28 is set as the display destination of the image and the display of the display part 28 is turned on, and the EVF 29 is set as not-display (that is, the display on the EVF 29 is turned off). In at least the case of/that "in the shooting standby state, and the switching setting of the display destination is set as automatic switching", during the eye-approach(ing) state, the EVF 29 is set as the display destination of the image and the display of the EVF 29 is turned on, and display part 28 is set as not-display.

For example, an infrared proximity sensor can be used as the eye detection part 57, and can detect the approach of an object to the eyepiece part 16 of the eyepiece finder 17 which incorporates the EVF 29. When an object approaches, infrared rays projected from a light projecting part (not shown) of the eye detection part 57 are reflected by the object and received by a light receiving part (not shown) of the infrared proximity sensor. The distance (proximity distance) between the object and the eyepiece part 16 (how close the object is to the eyepiece part 16) can also be determined by the amount of the received infrared light.

In this manner, the eye detection part 57 performs the eye detection of detecting the proximity distance of the object to the eyepiece part 16. In a case where an object approaching within a predetermined distance with respect to the eyepiece part 16 is detected after the start of the non-eye-approach state (non-proximity state), it is determined that the eye is approached to the eyepiece part 16 (eye-approach detection). When the object of which approach has been detected move away to be separated from the eyepiece part 16 by a predetermined distance or more after the start of the eye-approach state (proximity state), it is determined that the eye is separated from the eyepiece part 16 (detection of eye separation). The threshold for detecting the eye-approach and the threshold for detecting the eye separation may be different, for example, hysteresis or the like may be set. Note that a state until the eye separation is detected after the eyepiece is detected is defined as an "eye-approach state". A state until the eye-approach is detected after the eye separation is detected is defined as a "non-eye-approach state". Note that the infrared proximity sensor is an example of the eye detection part 57, and another sensor may be adopted as the eye detection part 57 as long as it can detect a state that can be regarded as eyepiece.

A GPS receiving part 119 receives a GPS signal including position information and time information from a GPS satellite (artificial satellite). The digital camera 100 specifies the position of the digital camera 100 and sets the reference time of the digital camera 100 on the basis of the GPS signal received by the GPS receiving part 119. The digital camera 100 can add information indicating the specified position and a shooting date and time based on the time-set reference time to the shot image.

A hash value generation part 210 executes a hash function on the image file to generate (calculate) a hash value. It should be noted that the system control part 50 may generate the hash value instead of the hash value generation part 210.

Various setting values of the digital camera 100 including the setting values of the shutter speed and the aperture are displayed on the outer viewfinder display part 43 via an outer viewfinder display part drive circuit 44.

A power supply control part 80 includes a battery detection circuit, a DC-DC converter, a switch circuit that switches blocks to be energized, and the like. The power supply control part 80 detects whether or not a battery is attached, a type of the attached battery, a remaining battery level, and the like. Furthermore, the power supply control part 80 controls the DC-DC converter, on the basis of the detection result and the instruction of the system control part 50, to supply a necessary voltage to each part including the recording medium 200 for a necessary period. A power supply part 30 includes a primary battery such as an alkaline battery and a lithium battery, and/or a secondary battery such as a NiCd battery, a NiMH battery, and a Li battery, an AC adapter, and the like.

The recording medium I/F 18 is an interface to the recording medium 200 such as a memory card or a hard disk. The recording medium 200 is a recording medium such as a memory card for recording a shot image, and includes a semiconductor memory, a magnetic disk, or the like. Note that, although only one recording medium 200 is shown in FIG. 2 for simplification, the digital camera 100 of the present embodiment is assumed to have a configuration including double slot, and includes a first slot and a second slot (not shown). The digital camera 100 having such configuration can record a shot image on any of the recording medium 200 mounted in the first slot and the recording medium 200' which is mounted in the second slot and has a configuration similar to that of the recording medium 200.

An operation part 70 is an input part that receives an operation from a user, and is used to input various operation instructions to the system control part 50. As shown in FIG. 2, the operation part 70 includes a shutter button 61, a mode changing switch 60, a power switch 72, a touch panel 70a, other operation members 70b, and the like. The "other operation members 70b" include a main electronic dial 71, a sub-electronic dial 73, a four-direction key 74, a SET button 75, a moving image button 76, an AE lock button 77, an enlargement button 78, a reproduction button 79, a menu button 81, a touch bar 82, and the like.

The shutter button 61 includes a first shutter switch 62 and a second shutter switch 64. The first shutter switch 62 is turned on when the shutter button 61 is being operated, that is, when the shutter button 61 is half-pressed (shooting preparation instruction), and generates and outputs a first shutter switch signal SW1. Upon receiving the first shutter switch signal SW1, the system control part 50 starts shooting preparation operations such as AF processing, AE processing, AWB processing, and EF processing.

The second shutter switch 64 is turned on when the operation of the shutter button 61 is completed, that is, when the shutter button 61 is fully pressed (shooting instruction), and generates and outputs a second shutter switch signal SW2. Upon receiving the second shutter switch signal SW2, the system control part 50 starts a series of shooting processing operations from reading a signal from the image pickup part 22 to writing the picked-up image as an image file onto the recording medium 200.

The mode changing switch 60 switches the operation mode of the system control part 50 to one of a still image shooting mode, a moving image shooting mode, a reproduction mode, and the like. The still image shooting mode includes an automatic shooting mode, an automatic scene determination mode, a manual mode, an aperture priority mode (Av mode), a shutter speed priority mode (Tv mode), and a program AE mode (P mode). Furthermore, there are various scene modes which are shooting settings set for each shooting scene, custom modes, and the like. The mode changing switch 60 allows the user to directly switch to one of these modes. Alternatively, a configuration, in which after the user temporarily switches the display screen to the list screen of the shooting modes by the mode changing switch 60, the user selectively switches the display screen to one of the displayed plurality of modes using another operation member, may be adopted. Similarly, the moving image shooting mode may include a plurality of modes.

The touch panel 70a is a touch sensor that detects various touch operations on a display surface of the display part 28 (an operation surface of the touch panel 70a). The touch panel 70a and the display part 28 can be integrally configured. For example, the touch panel 70a is configured to have a light transmittance set so as not to disturb the display of the display part 28, and is attached to the upper layer of the display surface of the display part 28. Further, the input coordinates on the touch panel 70a are corresponded to the display coordinates on the display surface of the display part 28. As a result, it is possible to provide a graphical user interface (GUI) by which the user can operates as if the user directly operate the screen displayed on the display part 28.

The system control part 50 can detect the following operations on the touch panel 70a or states of the touch panel 70a:
- A finger and/or a pen that has not touched the touch panel 70a newly touches the touch panel 70a. That is, start of touch (hereinafter, it is referred to as "Touch-Down").
- The touch panel 70a is being touched with a finger and/or a pen (hereinafter referred to as "Touch-On").
- The finger and/or the pen is moving while touching the touch panel 70a (hereinafter, referred to as "Touch-Move").
- The finger and/or the pen touching the touch panel 70a is separated (released) from the touch panel 70a. That is, the end of touch (hereinafter, referred to as "Touch-Up").
- A state in which nothing is touching the touch panel 70a (hereinafter, referred to as "Touch-Off').

When Touch-Down is detected, Touch-On is also detected at the same time. After Touch-Down, unless Touch-Up is detected, normally Touch-On continues to be detected. When Touch-Move is detected, Touch-On is detected at the same time. Even when Touch-On is detected, Touch-Move is not detected unless the touch position is moved. After Touch-Up of all the touching fingers and/or the touching pen are detected, it turns into Touch-Off

The system control part 50 is notified, via the internal bus, of the detection of these operations/states and the position coordinates of the touch panel 70a touched by the finger and/or the pen. Then, the system control part 50 determines what kind of operation (touch operation) has been performed on the touch panel 70a on the basis of the notified information. Regarding Touch-Move, a moving direction of a finger and/or a pen moving on the touch panel 70a can be determined for each vertical component and horizontal component on the touch panel 70a on the basis of a change in position coordinates.

In a case where Touch-Move of a predetermined distance or more is detected, it is determined that the slide operation is performed. An operation of quickly moving a finger by a certain distance while touching the touch panel 70a and then releasing the finger from the touch panel 70a is called "flick". The flick is, in other words, an operation of quickly sliding the touch panel 70a like flicking with a finger. In a case where it is detected that Touch-Move is performed at a predetermined speed or more for a predetermined distance or more and Touch-Up is detected while Touch-Move is being detected, it can be determined that flick has been performed (that is, it can be determined that flick has been performed following the sliding operation). Further, a touch operation of simultaneously touching (multi-touching) a plurality of parts (for example, two points) with a finger and/or a pen to bring the touch positions closer to each other is referred to as "pinch in", and a touch operation of simultaneously touching a plurality of parts with a finger and/or a pen to bring the touch positions away from each other is referred to as "pinch out". Pinch out and pinch in are collectively referred to as s "pinch operation".

The touch panel 70a may be any type of touch panel among various types of touch panels such as a resistive film type, a capacitive type, a surface acoustic wave type, an infrared type, an electromagnetic induction type, an image recognition type, and an optical sensor type. There are a method of detecting that a touch is performed due to contact to the touch panel and a method of detecting that a touch is performed due to approach of a finger and/or a pen to the touch panel, any of which may be adopted.

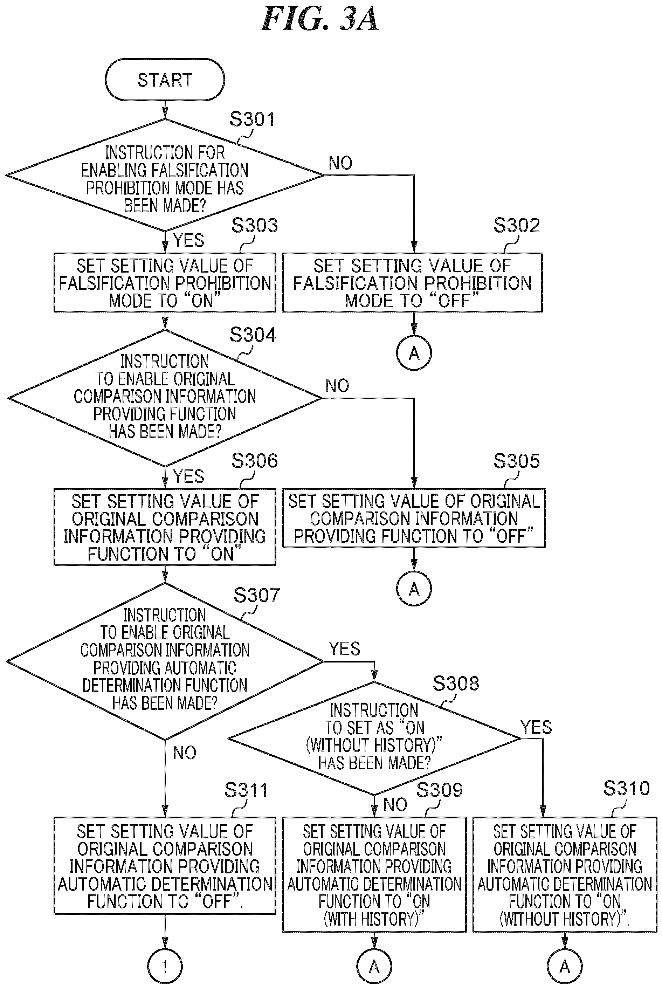

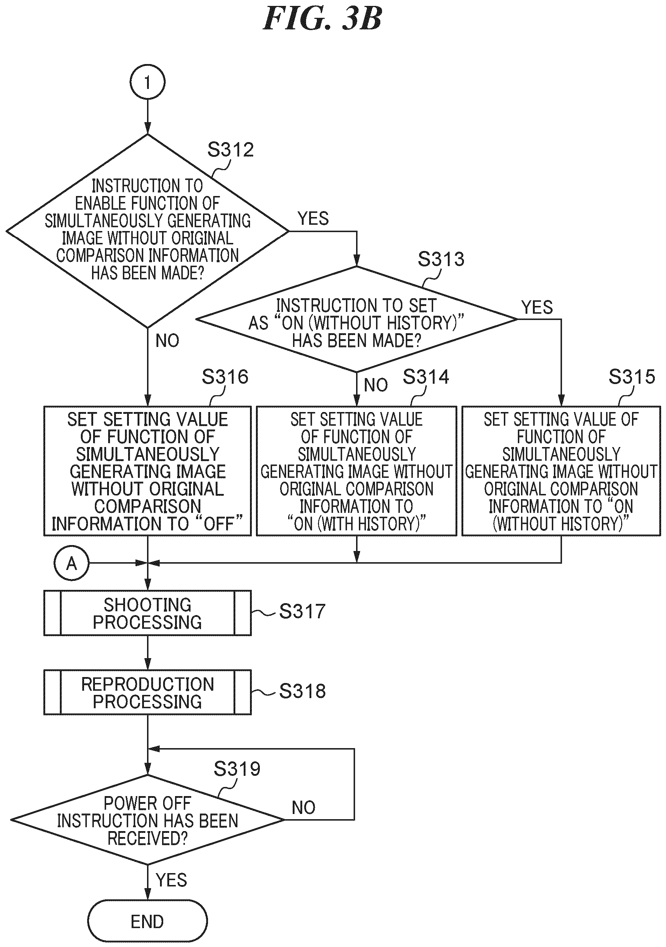

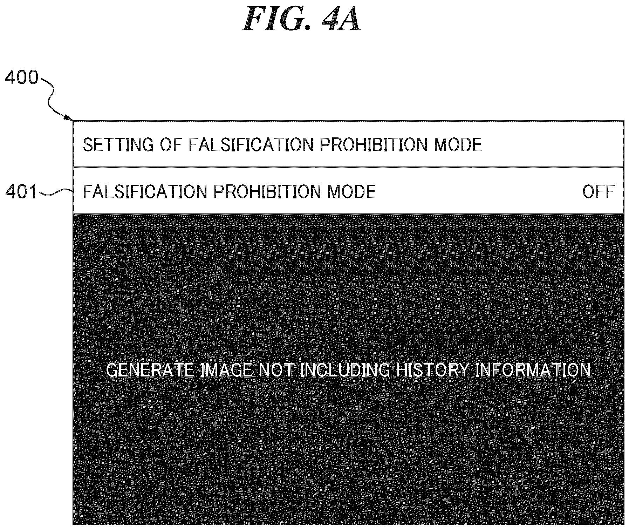

FIGS. 3A and 3B are a flowchart showing a procedure of shooting control processing executed by the digital camera 100 in FIGS. 1A and 1B. The shooting control processing is implemented, when the power switch 72 is turned on, by the system control part 50 expanding the program stored in the nonvolatile memory 56 into the system memory 52 and executing the program. Note that, it is assumed that at the start of the shooting control processing, a falsification prohibition mode is disabled in the digital camera 100 and a setting screen 400 in FIG. 4A is displayed on the display part 28. The setting screen 400 includes a setting item 401 capable of setting either "ON" for enabling the falsification prohibition mode or "OFF" for disabling the falsification prohibition mode. In the present embodiment, in a case where shooting is performed while the setting item 401 is set to "ON", the image file generated by the shooting includes below-mentioned history information. Meanwhile, when shooting is performed while the setting item 401 is set to "OFF", the image file generated by the shooting does not include the below-mentioned history information. In the present embodiment, it is possible to determine whether or not malicious falsification has been performed on the basis of whether or not the hash value and/or the signature value included in the history information has been changed.

In FIGS. 3A and 3B, first, in S301 ("S" stands for a step), the system control part 50 determines whether or not an instruction for enabling the falsification prohibition mode has been made. Specifically, the system control part 50 determines whether an instruction to set "ON" or " OFF" has been made in the setting item 401.

In a case where it is determined in S301 that the instruction to enable the falsification prohibition mode has not been performed, that is, in a case where the instruction to set "OFF" has been performed in the setting item 401, the shooting control processing proceeds to S302. In S302, the system control part 50 sets the setting value of the falsification prohibition mode to "OFF" which is a setting value for invalidating the falsification prohibition mode. The setting value "OFF" is stored in the memory 32. Next, the shooting control processing proceeds to S317 described later.

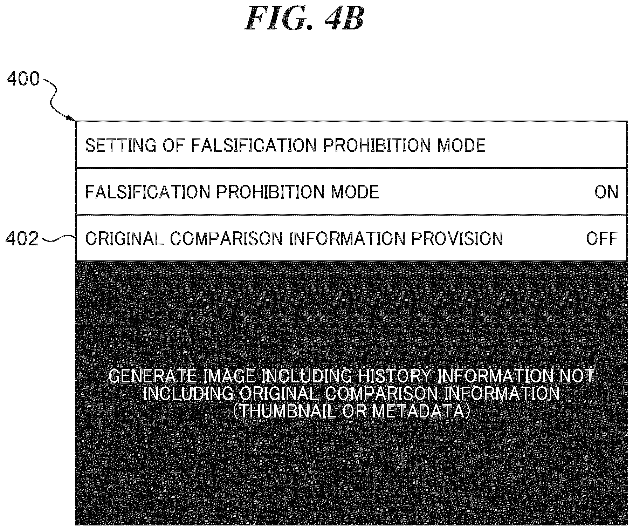

In a case where it is determined in S301 that the instruction to enable the falsification prohibition mode has been made, that is, in a case where the instruction to set "ON" has been made in the setting item 401, the shooting control processing proceeds to S303. In S303, the system control part 50 sets the setting value of the falsification prohibition mode to "ON" which is a setting value for enabling the falsification prohibition mode. The setting value "ON" is also stored in the memory 32. In a case where the setting value of the falsification prohibition mode is set to "ON", a setting item 402 is added to the setting screen 400 (FIG. 4B). In the setting item 402, either "ON" for enabling an "original comparison information providing function" or "OFF" for disabling the "original comparison information providing function" can be set.

In the present embodiment, in a case where shooting is performed while setting item 402 is set to "ON", the image file generated by the shooting includes the below-mentioned history information, wherein the history information includes the original comparison information. The original comparison information is information for grasping a change of the image file from a generation time point of the image file, and is, for example, metadata at the time of shooting, including thumbnail data (thumbnail image) obtained by reducing the image data at the time of shooting and/or information such as a shooting place. By generating such image file including history information, not only falsification of the said image file is detected, but also a change from a shooting time point of image data or metadata can be grasped by comparing the said image file with original comparison information.

Next, the system control part 50 determines whether or not an instruction to enable an original comparison information providing function has been made (S304). Specifically, the system control part 50 determines whether an instruction to set as "ON" for enabling the original comparison information providing function or as "OFF" for disabling the original comparison information providing function has been made in the setting item 402.

In a case where it is determined in S304 that the instruction to enable the original comparison information providing function is not made, that is, in a case where the instruction to set as "OFF" is made in the setting item 402, the shooting control processing proceeds to S305. In S305, the system control part 50 sets the setting value of the original comparison information providing function to "OFF" which is a setting value for disabling the original comparison information providing function. The setting value "OFF" is also stored in the memory 32. Next, the shooting control processing proceeds to S317 described later.

In a case where it is determined in S304 that the instruction to enable the original comparison information providing function is made, that is, in a case where the instruction to set as "ON" is made in the setting item 402, the shooting control processing proceeds to S306. In S306, the system control part 50 sets the setting value of the original comparison information providing function to "ON" which is a setting value for enabling the original comparison information providing function. The setting value "ON" is also stored in the memory 32.

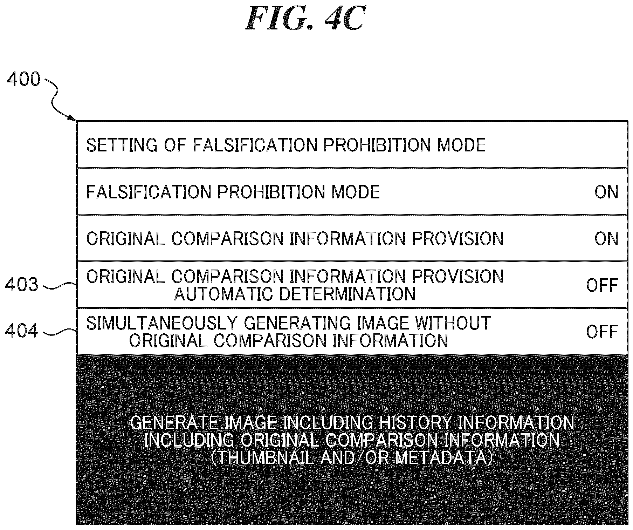

In a case where "ON" is set in the setting item 402, a setting item 403 for setting an "original comparison information providing automatic determination function" is added to the setting screen 400 (FIG. 4C). In the setting item 403, any one of "ON (with history)", "ON (without history)", and "OFF" can be set. "ON (with history)" and "ON (without history)" are setting values for enabling the original comparison information providing automatic determination function. "OFF" is a setting value for disabling the original comparison information providing automatic determination function.

In a case where "ON (with history)" or "ON (without history)" is set in the setting item 403 and shooting is performed, whether to include the original comparison information in the image file is controlled on the basis of the characteristic of the subject. In a case where "ON (with history)" is set in the setting item 403 and shooting is performed, when it is determined not to include the original comparison information in the image file on the basis of the characteristic of the subject, an image file including the history information is generated. This history information does not include original comparison information. Meanwhile, in a case where "ON (without history)" is set in the setting item 403 and shooting is performed, when it is determined not to include the original comparison information in the image file on the basis of the characteristic of the subject, the image file including neither the original comparison information nor the history information is generated.

In addition, in a case where "ON" is set in the setting item 402, a setting item 404 for setting a function of simultaneously generating an image without original comparison information is also added to the setting screen 400 (FIG. 4C). In the setting item 404, any one of "ON (with history)", "ON (without history)", and "OFF" can be set. "ON (with history)" and "ON (without history)" are setting values for enabling the function of simultaneously generating an image without original comparison information. "OFF" is a setting value for disabling the function of simultaneously generating an image without original comparison information. It should be noted that the setting item 404 can be operated only in a case where "OFF" is set in the setting item 403.

In a case where "ON (with history)" is set in the setting item 404 and shooting is performed, two image files are generated, specifically, an image file including the original comparison information and an image file not including the original comparison information are generated, wherein the said image file not including the original comparison information includes the history information. In a case where "ON (without history)" is set in item 404 and shooting is performed, an image file including the original comparison information and an image file not including the original comparison information are generated, wherein the said image file not including the original comparison information does not include the history information.

Next, the system control part 50 determines whether or not an instruction to enable the original comparison information providing automatic determination function has been made (S307). Specifically, the system control part 50 determines which one of "ON (with history)", "ON (without history)", and "OFF" has been instructed to set in the setting item 403. In a case where it is determined in S307 that the instruction to enable the original comparison information providing automatic determination function has been made, that is, in a case where the instruction to set as "ON (with history)" or "ON (without history)" is made in the setting item 403, the shooting control processing proceeds to S308.

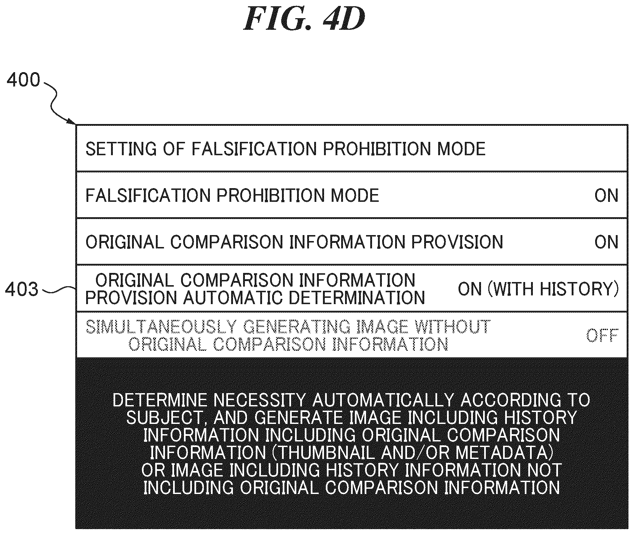

In S308, the system control part 50 determines whether or not an instruction to set as "ON (without history)" has been made in the setting item 403. In a case where it is determined in S308 that the instruction to set as "ON (without history)" has not been made in the setting item 403, that is, in a case where the instruction to set as "ON (with history)" has been made in the setting item 403 (for example, refer to the setting screen 400 in FIG. 4D.), the shooting control processing proceeds to S309. In S309, the system control part 50 sets the setting value of the original comparison information providing automatic determination function to "ON (with history)". The setting value "ON (with history)" is also stored in the memory 32. Next, the shooting control processing proceeds to S317 described later.

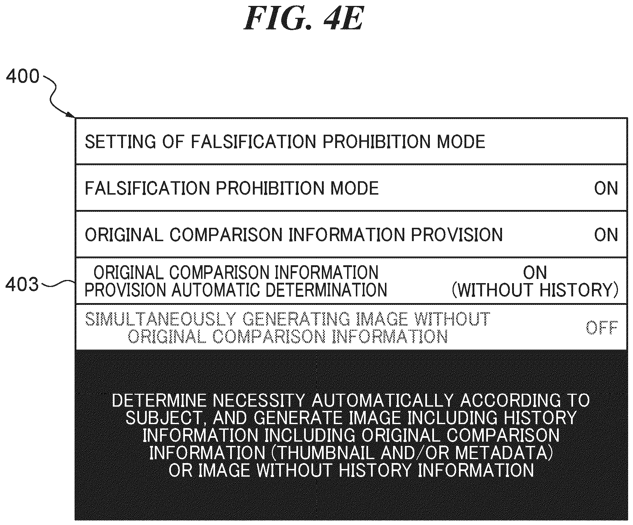

In a case where it is determined in S308 that an instruction to set as "ON (without history)" has been made in the setting item 403 (for example, refer to the setting screen 400 in FIG. 4E.), the shooting control processing moves on to S310. In S310, the system control part 50 sets the setting value of the original comparison information providing automatic determination function to "ON (without history)". The setting value "ON (without history)" is also stored in the memory 32. Next, the shooting control processing proceeds to S317 described later.

In a case where it is determined in S307 that the instruction to enable the original comparison information providing automatic determination function has not been made, that is, in a case where the instruction to set as "OFF" is made in the setting item 403, the shooting control processing proceeds to S311. In S311, the system control part 50 sets the setting value of the original comparison information providing automatic determination function to "OFF". The setting value "OFF" is also stored in the memory 32.

Next, the system control part 50 determines whether or not an instruction to enable the function of simultaneously generating an image without original comparison information has been made (S312). Specifically, the system control part 50 determines which one of "ON (with history)", "ON (without history)", and "OFF" has been instructed to set in the setting item 404.

In a case where it is determined in S312 that the instruction to enable the function of simultaneously generating an image without original comparison information has been made, that is, in a case where the instruction to set as "ON (with history)" or "ON (without history)" is made in the setting item 404, the shooting control processing proceeds to S313. In S313, the system control part 50 determines whether or not an instruction to set as "ON (without history)" has been made in the setting item 404.

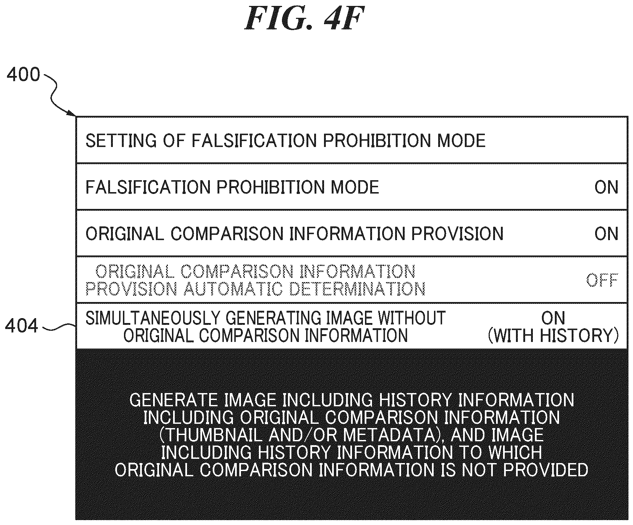

In a case where it is determined in S313 that the instruction to set as "ON (with without history)" has not been made in the setting item 404, that is, in a case where the instruction to set as "ON (with history)" has been made in the setting item 404 (for example, refer to the setting screen 400 in FIG. 4F.), the shooting control processing proceeds to S314. In S314, the system control part 50 sets the setting value of the function of simultaneously generating an image without original comparison information to "ON (with history)". The setting value "ON (with history)" is also stored in the memory 32. Next, the shooting control processing proceeds to S317 described later.

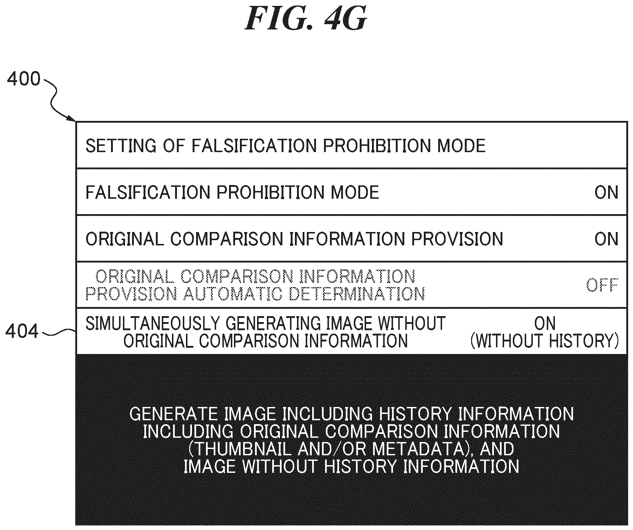

In a case where it is determined in S313 that an instruction to set as "ON (without history)" has been made in the setting item 404 (for example, refer to the setting screen 400 in FIG. 4G.), the shooting control processing proceeds to S315. In S315, the system control part 50 sets the setting value of the function of simultaneously generating an image without original comparison information to "ON (without history)". The setting value "ON (without history)" is also stored in the memory 32. Next, the shooting control processing proceeds to S317 described later.

In a case where it is determined in S312 that the instruction for enabling the function of simultaneously generating an image without original comparison information has not been made, that is, in a case where the instruction to set as "OFF" is made in the setting item 404 (for example, refer to the setting screen 400 in FIG. 4C.), the shooting control processing proceeds to S316. In step S316, the system control part 50 sets the setting value of the function of simultaneously generating an image without original comparison information to "OFF". The setting value "OFF" is also stored in the memory 32.

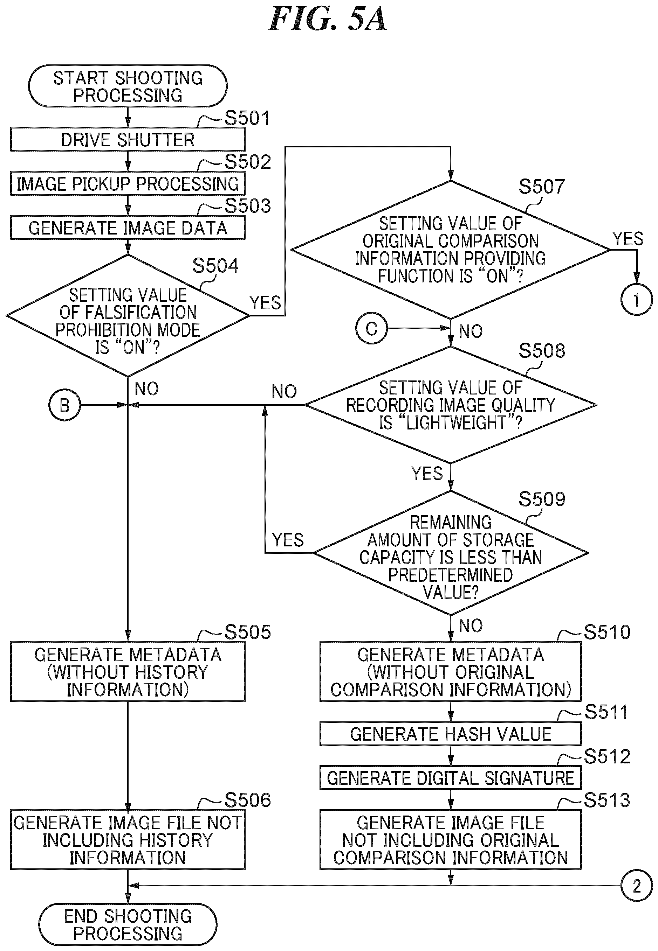

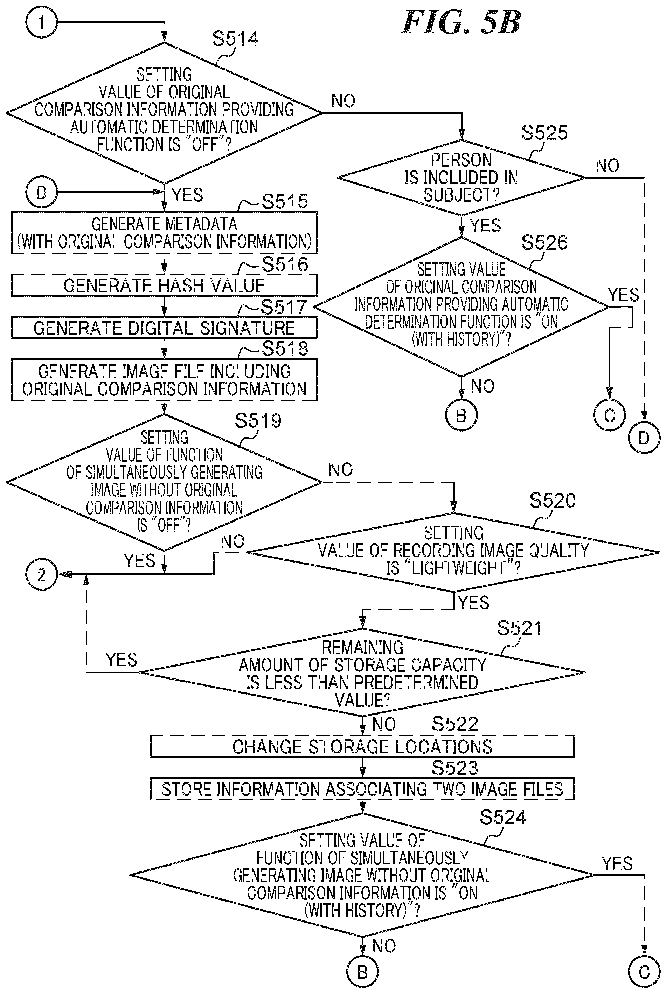

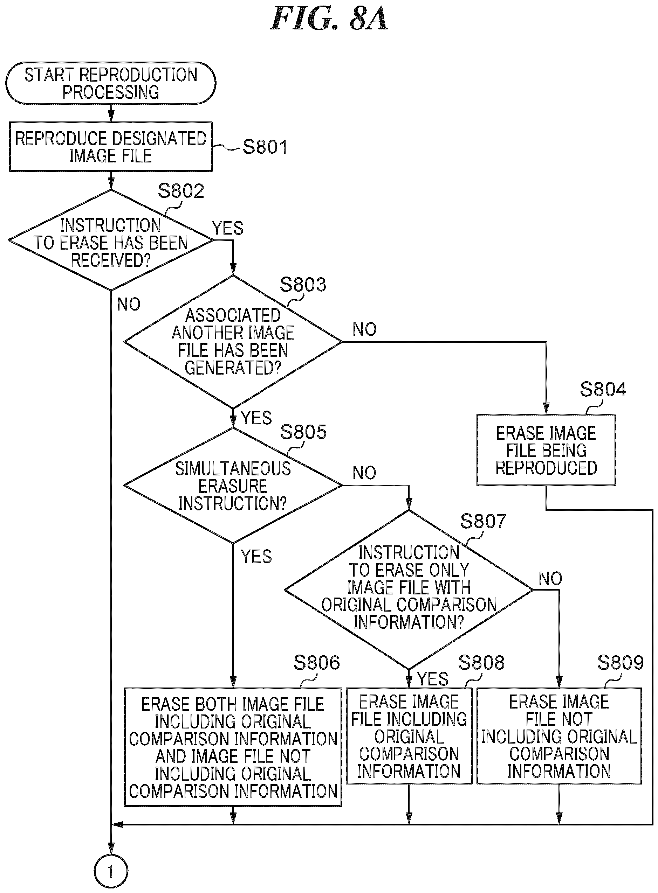

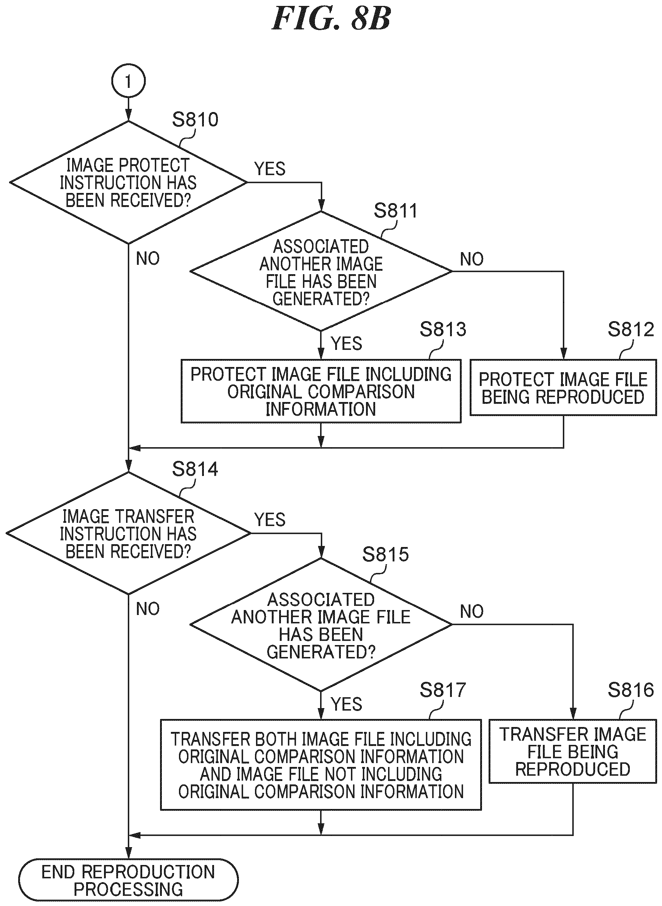

Next, the system control part 50 executes shooting processing of FIGS. 5A and 5B to be described later (S317). Next, the system control part 50 executes reproduction processing of FIGS. 8A and 8B to be described later (S318). Next, the system control part 50 determines whether or not a power off instruction has been received from the user (S319). The system control part 50 waits until receiving the power off instruction from the user. When the power off instruction is received from the user (YES in S319), the shooting control processing ends.

FIGS. 5A and 5B are a flowchart showing a procedure of the shooting processing in S317 of FIG. 3B. The shooting processing of FIGS. 5A and 5B is started by receiving a shooting start operation such as pressing the shutter button 61, and is ended by receiving a shooting end operation such as stopping pressing the shutter button 61.

In FIGS. 5A and 5B, the system control part 50 drives the shutter 101 arranged on the subject side of the image pickup part 22 in order to control the exposure time (S501). Next, the system control part 50 performs image pickup processing of converting light from the subject received by the image pickup part 22 via the shutter 101 into an electric signal (analog image data) (S502). Next, the system control part 50 performs image processing such as development processing and encoding processing on the electric signal obtained by the image pickup processing in S502 to generate image data (S503). Next, the system control part 50 determines whether the setting value of the falsification prohibition mode is "ON" (S504).

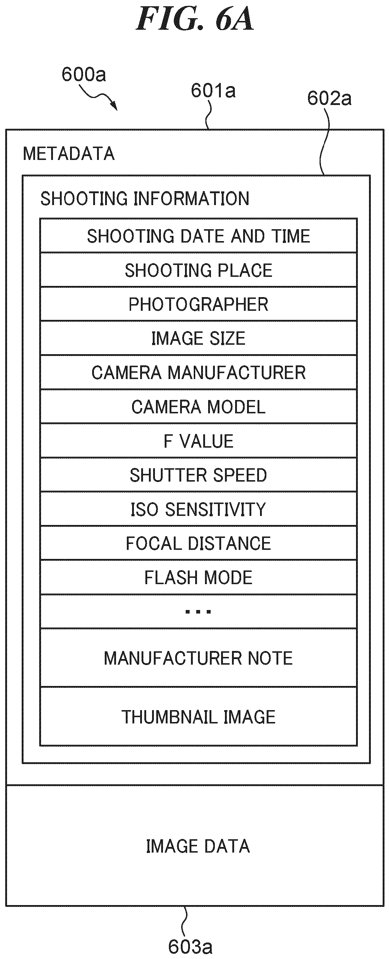

In a case where it is determined in S504 that the setting value of the falsification prohibition mode is not "ON", that is, in a case where the setting value of the falsification prohibition mode is" OFF", the system control part 50 generates metadata 601a as shown in FIG. 6A (S505). The metadata 601a includes shooting information 602a. It should be noted that the metadata 601a generated in S505 does not include the below-mentioned history information. The shooting information 602a is information when image pickup processing for generating the image data 603a is executed, and includes, for example, shooting date and time, a photographer, an image size, a manufacturer and a model of the image pickup apparatus, various shooting parameters set at the time of shooting, a shooting place, a thumbnail image, and the like. The shooting information 602a is generated according to a predetermined technical standard, for example, an exchangeable image file format (EXIF).

Next, the system control part 50 generates an image file not including the history information (S506). Specifically, the system control part 50 generates an image file 600a of FIG. 6A consisting of the metadata 601a generated in S505 and the image data 603a generated in S503. Note that in S506, in a case where the image data is a still image, an image file is generated according to the JPEG format, and in a case where the image data is a moving image, an image file is generated according to the MPEG format. Thereafter, the shooting processing ends.

In a case where it is determined in S504 that the setting value of the falsification prohibition mode is "ON", the system control part 50 determines whether or not the setting value of the original comparison information providing function is "ON" (S507). In a case where it is determined in S507 that the setting value of the original comparison information providing function is not "ON", that is, in a case where the setting value of the original comparison information providing function is "OFF", the shooting processing proceeds to S508. In step S508, the system control part 50 determines whether or not the setting value of the recording image quality, which is a setting item related to the number of pixels of the image data to be recorded, is "lightweight" having the smallest number of pixels.

In a case where it is determined in S508 that the setting value of the recording image quality is not "lightweight", the shooting processing proceeds to S505. In this case, as described above, the image file 600a not including the history information is generated.

In a case where it is determined in S508 that the setting value of the recording image quality is "lightweight", the system control part 50 determines whether or not the remaining amount of the storage capacity of the recording medium 200, which is the storage location of the generated image file, is less than a predetermined value (S509). In a case where it is determined in S509 that the remaining amount of the storage capacity of the recording medium 200 is less than the predetermined value, the shooting processing proceeds to S505. Also in this case, as described above, the image file 600a not including the history information is generated. As a result, in the present embodiment, even when the setting value of the falsification prohibition mode is "ON", in a case where the setting value of the recording image quality is not "lightweight" or in a case where the remaining amount of the storage capacity of the recording medium 200, which is the storage location of the generated image file, is less than the predetermined value, the image file 600a in which the data amount is reduced without including the history information is generated.

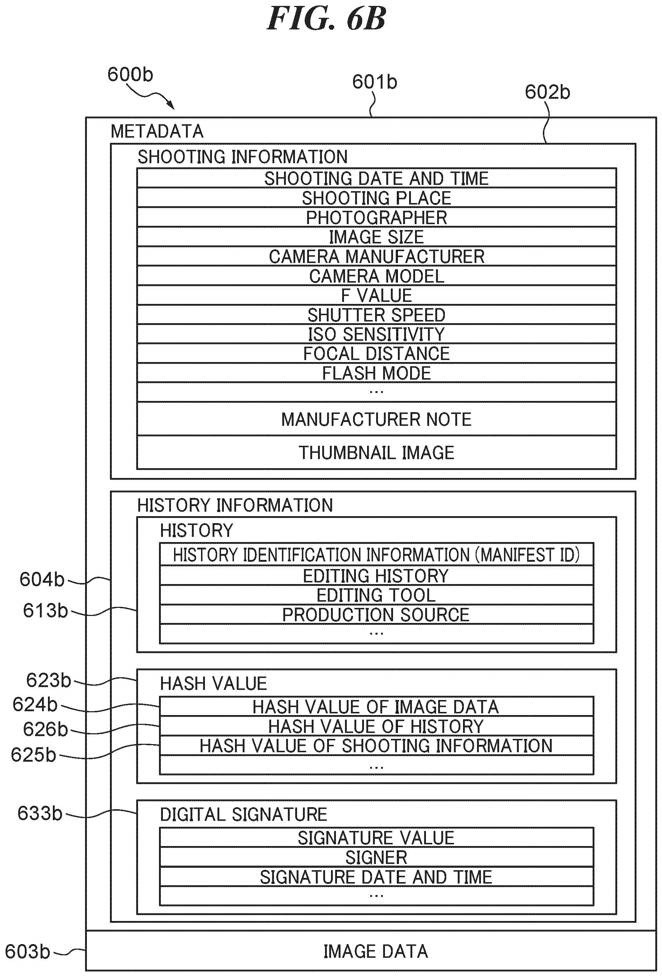

In a case where it is determined in S509 that the remaining amount of the storage capacity of the recording medium 200 is not less than the predetermined value, the system control part 50 generates metadata 601b as shown in FIG. 6B (S510). The metadata 601b includes history information 604b in addition to shooting information 602b having the similar configuration to that of shooting information 602a described above. The metadata 601b generated in S510 does not include the original comparison information. The history information 604b is information for proving the credibility of the image data 603b, and is used when verifying the source and the history of the image data 603b. The history information 604b is generated according to a predetermined technical standard, for example, C2PA (Coalition for Content Provenance and Authenticity), and has a prescribed structure. The history information 604b includes a history 613b (Assertion), a hash value 623b for guaranteeing the history 613b, and a digital signature 633b.

The history 613b includes "history identification information" (Manifest ID) for uniquely identifying the history 613b, an "editing history" indicating an edited content performed on the image data 603b, an "editing tool" indicating a tool used for the editing, and a "production source" indicating a producer (production source) of the image data 603b. It should be noted that the image data generated in S503 has just been generated by shooting. The image data that has just been generated has not been edited; therefore, in this case, information indicating "generation" is recorded in the editing history, and information indicating the digital camera 100 is recorded in the "editing tool".

Next, the system control part 50 generates the hash value 623b (S511). For example, the system control part 50 executes a hash function on the binary data of each of the image data 603b and the history 613b, to generate the hash value 624b of the image data and the hash value 626b of the history which are included in the hash value 623b. A hash function may be performed on the binary data of the shooting information 602b to generate the hash value 625b of the shooting information. It should be noted that for the binary data of the history 613b, in order to detect falsification in finer units, a hash value may be generated for each finer unit such as "editing history" or "production source".

Next, the system control part 50 generates a digital signature 633b (S512). The digital signature 633b includes information indicating a signature value, a signer, and a signature date and time. The "signature value" is generated by encryption being performed on the generated hash value 623b by using a previously-prepared secret key. A public key to be paired with the secret keys used this time is also included in the digital signature 633b. Note that, in order to prove that the public key is a trusted maker, information indicating the maker of the digital camera 100 and/or a public key certificate indicating that the public key is authenticated by the certificate authority may be included in the digital signature 633b as the "signer". By assigning the digital signature 633b including such a signer to the image file 600b, it is possible to provide information indicating that the said image file 600b is reliable. Note that, instead of the information indicating the maker, information indicating the model of the digital camera 100 may be used as the signer. The "signature date and time" is a date and time at which generation of the digital signature 633b is completed. In addition, the shooting date and time may also be included in the history 613b.

Next, the system control part 50 generates an image file not including the original comparison information (S513). Specifically, the system control part 50 generates the image file 600b of FIG. 6B consisting of the metadata 601b and the image data 603b generated in S503. Note that also in S513, in a case where the image data is a still image, an image file is generated according to the JPEG format, and in a case where the image data is a moving image, an image file is generated according to the MPEG format. Thereafter, the shooting processing ends.

In a case where it is determined in S507 that the setting value of the original comparison information providing function is "ON", the shooting processing proceeds to S514. In S514, the system control part 50 determines whether or not the setting value of the original comparison information providing automatic determination function is "OFF".

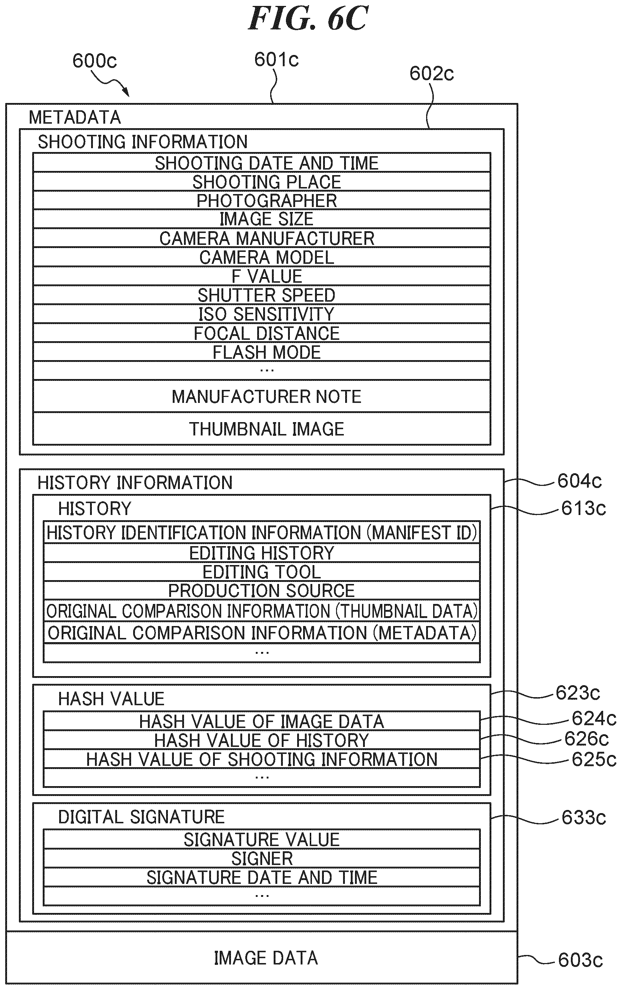

In a case where it is determined in S514 that the setting value of the original comparison information providing automatic determination function is "OFF", the system control part 50 generates metadata 601c as shown in FIG. 6C (S515). The metadata 601c includes history information 604c in addition to the shooting information 602c having the similar configuration to the shooting information 602a described above. The history information 604c includes a history 613c, a hash value 623c, and a digital signature 633c. The history 613c includes the original comparison information in addition to the information included in the above-described history 613b. The hash value 623c and the digital signature 633c have the similar configurations to the hash value 623b and the digital signature 633b described above, respectively.

Next, the system control part 50 generates the hash value 623c (S516). For example, the system control part 50 executes a hash function on the binary data of each of the image data 603c and the history 613c, to generate the hash value 624c of the image data and the hash value 626c of the history which are included in the hash value 623c. The hash function is performed on the binary data of the shooting information 602c to generate a hash value 625c of the shooting information. It should be noted that similarly to the case of the above-described history 613b, also for of binary data of the history 613c, in order to detect falsification in finer units, a hash value may be generated for each finer unit such as the "editing history" or a "production source".

Next, the system control part 50 generates the digital signature 633c (S517). Next, the system control part 50 generates an image file including the original comparison information (S518). Specifically, the system control part 50 generates the image file 600c of FIG. 6C consisting of the metadata 601c and the image data 603c generated in S503. Note that also in S518, in a case where the image data is a still image, an image file is generated according to the JPEG format, and in a case where the image data is a moving image, an image file is generated according to the MPEG format.

Next, the system control part 50 determines whether or not the setting value of the function of simultaneously generating an image without original comparison information is "OFF" (S519). In a case where it is determined in S519 that the setting value of the function of simultaneously generating an image without original comparison information is "OFF", the shooting processing ends.

In a case where it is determined in S519 that the setting value of the function of simultaneously generating an image without original comparison information is not "OFF", that is, in a case where the setting value of the function of simultaneously generating an image without original comparison information is "ON (with history)" or "ON (without history)", the shooting processing proceeds to S520.

In step S520, the system control part 50 determines whether or not the setting value of the above-mentioned recording image quality is "lightweight".

In a case where it is determined in S520 that the setting value of the recording image quality is "lightweight", the shooting processing proceeds to S521. In S521, the system control part 50 determines whether or not the remaining amount of the storage capacity of the storage location, in which the image file generated together with the image file 600c generated in S518 and not including the original comparison information is to be stored, is less than a predetermined value. Note that the storage location in which the image file not including the original comparison information is to be stored is a recording medium different from the recording medium 200 recording the image file 600c generated in S518, specifically, the recording medium 200' mounted in the second slot.

In a case where it is determined in S521 that the remaining amount of the storage capacity of the recording medium 200' is not less than the predetermined value, the shooting processing proceeds to S522. In S522, the system control part 50 changes the storage location of the image file not including the original comparison information to the recording medium 200' mounted in the second slot. As a result, when both the image file including the original comparison information and the image file not including the original comparison information are generated, these generated image files can be recorded in different storage locations to simplify data organization.

Next, the system control part 50 stores, in the memory 32, information associating the two image files with each other (S523). For example, the system control part 50 stores, in the memory 32, information indicating that the image file 600c generated in S518 and the image file not including the original comparison information generated in the processing to be described later are image files generated by the same shooting processing. As a result, it possible to process these two image files (which are image file including original comparison information and image file not including original comparison information) in association with each other.

Note that in the present embodiment, the method for associating the two image files is not limited to the method mentioned above. For example, the file name of the image file not including the original comparison information generated in the processing to be described later may be a file name (for example, "AAA_C2PA") made by a predetermined character string indicating the relevance with the image file 600c being added to a file name of the image file 600c generated in S518 (for example, "AAA"). In the case where both the image file including the original comparison information and the image file not including the original comparison information include the history, whether or not these image files are generated through the same shooting processing may be determined on the basis of their history identification information (Manifest ID).

Next, the system control part 50 determines whether or not the setting value of the function of simultaneously generating an image without original comparison information is "ON (with history)" (S524).

In a case where it is determined in S524 that the setting value of the function of simultaneously generating an image without original comparison information is "ON (with history)", the shooting processing proceeds to S508, and then processing in S509 to S513 are performed. As described above, in the present embodiment, in a case where the setting value of the function of simultaneously generating an image without original comparison information is "ON (with history)", the image file 600c including the original comparison information and the image file 600b are generated. As described above, the image file 600b includes the history information 604b, and the history information 604b does not include the original comparison information.

In a case where it is determined in S524 that the setting value of the function of simultaneously generating an image without original comparison information is not "ON (with history)", that is, in a case where the setting value of the function of simultaneously generating an image without original comparison information is "ON (with without history)", the shooting processing proceeds to S505. Thereafter, S506 is performed. As described above, in the present embodiment, in a case where the setting value of the function of simultaneously generating an image without original comparison information is "ON (without history)", the image file 600c including the original comparison information and the image file 600a are generated. As described above, the image file 600a does not include any of the original comparison information and the history information.

In a case where it is determined in S520 that the setting value of the recording image quality is not "lightweight", or in a case where it is determined in S521 that the remaining amount of the storage capacity of the recording medium 200' is less than the predetermined value, the shooting processing ends. As described above, in the present embodiment, even when the setting value of the function of simultaneously generating an image without original comparison information is "ON (with history)" or "ON (without history)", only image file 600c including the original comparison information is generated in a case where the setting value of the recording image quality is not "lightweight" or in a case where the remaining capacity of the storage capacity of the storage location of the image file not including the original comparison information is less than the predetermined value.

In a case where it is determined in S514 that the setting value of the original comparison information providing automatic determination function is not "OFF", that is, in a case where the setting value of the original comparison information providing automatic determination function is "ON (with history)" or "ON (without history)", the shooting processing proceeds to S525. In S525, the system control part 50 determines whether or not a person is included in the subject. In a case where it is determined in S525 that the subject does not include a person, the shooting processing proceeds to S515, and then the processing of S516 to S519 is performed.

In the present embodiment, as described above, only in a case where the setting item 403 for the original comparison information providing automatic determination function is "OFF", the setting item 404 for the function of simultaneously generating an image without original comparison information can be operated. That is, both the original comparison information providing automatic determination function and the function of simultaneously generating an image without original comparison information cannot be enabled at the same time. It is determined in S514 that the setting value of the original comparison information providing automatic determination function is "ON (with history)" or "ON (without history)"; therefore, it is determined, in S519 after S525, that the setting value of the function of simultaneously generating an image without original comparison information is "OFF", and the shooting processing ends. As described above, in the present embodiment, in a case where the setting value of the original comparison information providing automatic determination function is "ON (with history)" or "ON (without history)" and no person is included in the subject, the image file 600c including the original comparison information is generated.

In a case where it is determined in S525 that a person is included in the subject, the system control part 50 determines whether or not the setting value of the original comparison information providing automatic determination function is "ON (with history)" (S526).

In a case where it is determined in S526 that the setting value of the original comparison information providing automatic determination function is "ON (with history)", the shooting processing proceeds to S508, and then processing in S509 to S513 are performed. As described above, in the present embodiment, in a case where the setting value of the original comparison information providing automatic determination function is "ON (with history)" and the subject includes a person, the image file 600b is generated. As described above, the image file 600b includes the history information 604b, and the history information 604b does not include the original comparison information.

In a case where it is determined in S526 that the setting value of the original comparison information providing automatic determination function is not "ON (with history)", that is, in a case where the setting value of the original comparison information providing automatic determination function is "ON (without history)", the shooting processing proceeds to S505, and then S506 is performed. As described above, in the present embodiment, in a case where the setting value of the original comparison information providing automatic determination function is "ON (without history)" and the subject includes a person, the image file 600a including neither the original comparison information nor the history information is generated.

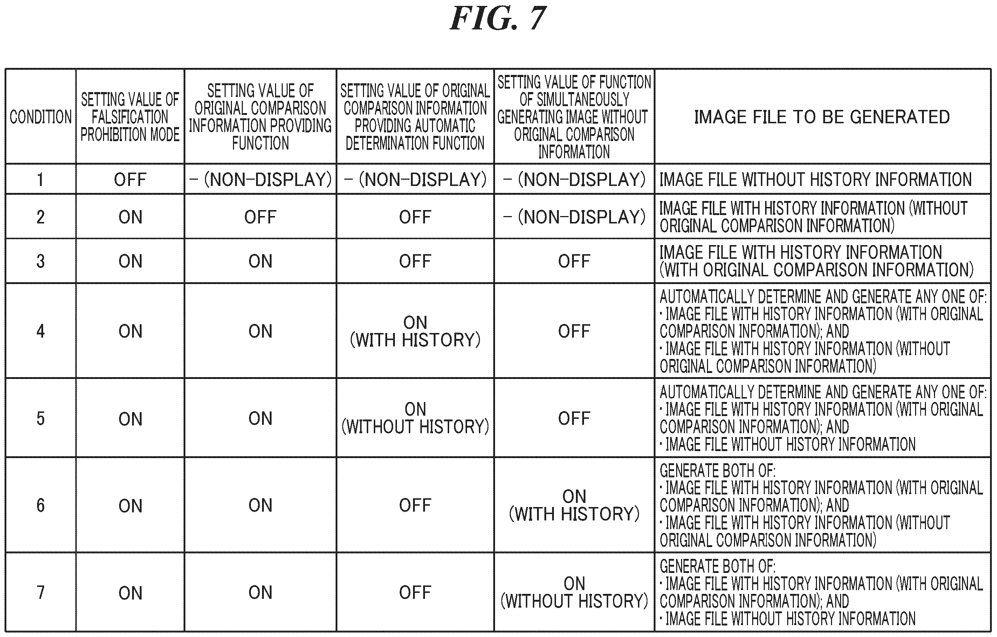

FIG. 7 is a table summarizing image files to be generated in the present embodiment for each condition. As shown in FIG. 7, in the present embodiment, image files having different configurations are generated on the basis of the setting values of the setting items 401 to 404 and the characteristics of the subject.

As described above, in the present embodiment, when the digital camera 100 performs the shooting, any of the image files 600a to 600c is generated. Note that any of these image files 600a to 600c may be edited after generation. For example, when the image file 600c is edited by a legitimate procedure using an authorized editing tool, the history information is newly generated according to a predetermined technical standard on the basis of the edited content, and the newly generated history information is added to the metadata 601c of the image file 600c. The history information is newly generated every time the image file 600c is edited and added to the metadata 601c of the image file 600c. Meanwhile, in a case where the image file 600c is edited using an unauthorized editing tool and/or edited by an unauthorized procedure, the history information may not be given to the image file 600c and/or the history information given to the image file 600c may not be consistent with a predetermined technical standard.

Furthermore, in the present embodiment, falsification of the image files 600b and 600c can be detected by generating the hash value or the signature value. For example, a hash function is performed on the binary data for the image data 603c of the image file 600c to generate the hash value. Then, the generated hash value is compared with the hash value 624c of the image data of the image file 600c. As a result, it is possible to verify whether the image data 603c has been altered. Similarly, the hash function is performed on the binary data for the shooting information 602c of the image file 600c to generate a hash value. Then, the generated hash value is compared with the hash value 625c of the shooting information of the image file 600c. As a result, it is possible to verify whether or not the shooting information 602c including the shooting date and time, the shooting place, and the like has been altered. Further, the hash function is performed on the binary data for the history 613c to generate the hash value. Then, the generated hash value is compared with the hash value 626c of the history of the image file 600c. As a result, it is possible to verify whether the history 613c has been altered.

Note that such comparison may be performed using binary data for each finer unit such as an editing history, a production source, thumbnail data, metadata, or the like. In addition, since the signature value can be decrypted with the public key, it is also possible to perform comparison using hash values obtained in the decryption and determine that the signature value has been successfully verified in a case where the hash values match. In this manner, a mechanism for detecting falsification can be incorporated in the image file.

According to the above-described embodiment, the image file 600c including the original comparison information and the image file not including the original comparison information are generated. As a result, two image files having different configurations can be provided to the user, and thus the user can select an image file to be used according to the purpose.

In the above-described embodiment, the original comparison information can be the thumbnail image obtained by the image data being reduced. As a result, the user can select, according to the purpose, whether to use the image file 600c by which the change in the image data from the time of shooting can be grasped or an image file (image file not including the original comparison information) having a structure by which the change in the image data from the time of shooting cannot be grasped but editing processing for protecting privacy is easily performed.

Furthermore, in the above-described embodiment, the original comparison information can be metadata at the time of shooting including information indicating the shooting place. As a result, the user can select, according to the purpose, whether to use the image file 600c by which falsification of the information of the shooting place and/or the like can be detected or to use the image file (image file not including the original comparison information) having a structure by which falsification of the information of the shooting place and/or the like cannot be detected but editing processing for protecting privacy is easily performed.

Note that, in the shooting processing of FIGS. 5A and 5B described above, the configuration of determining in S525 whether or not a person is included in the subject has been described; however, the present invention is not limited to this configuration. For example, the present invention may be configured to determine whether or not the shooting place is a place where shooting is not recommended.

Further, in the shooting processing of FIGS. 5A and 5B described above, the configuration in which the image file is controlled not to include the original comparison information has been described; however, the present invention is not limited to this configuration. For example, instead of generating an image file not including the original comparison information, image processing such as mosaic processing may be performed on the thumbnail data as the original comparison information, and alternatively, on the metadata (position data such as a shooting place) as the original comparison information, processing of concealing the metadata may be performed. Note that it is also possible to control so as to perform processing on the original comparison information is processed, but so as not to perform processing on the image data. In addition, information indicating that the original comparison information has been processed may be included in the image file.

Next, the reproduction processing of S318 will be described. In the present embodiment, in a case where the setting value of the function of simultaneously generating an image without original comparison information is "ON (with history)" or "ON (without history)", the image file including the original comparison information and the image file not including the original comparison information are generated. When two image files having different configurations are generated, the user may wish to operate only one of the two image files, or the user may wish to simultaneously operate both of the two image files. In order to respond to such needs, in the present embodiment, the processing of S318 capable of realizing the optimum operation for these two image files is performed.

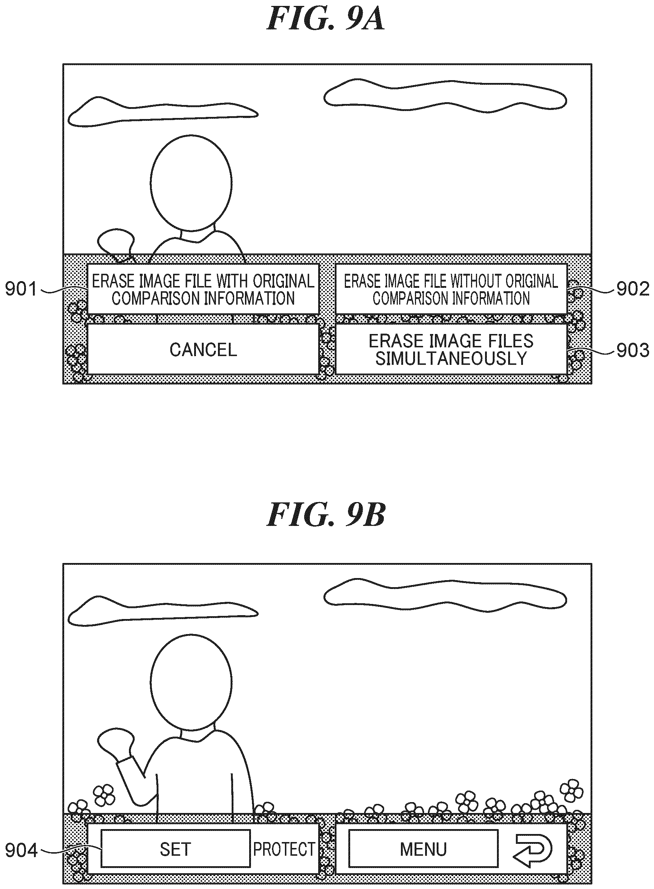

FIGS. 8A and 8B are a flowchart showing a procedure of the reproduction processing in S318 of FIG. 3B. The reproduction processing of FIGS. 8A and 8B starts when a reproduction start operation such as pressing of the reproduction button 79 is received, and ends when a reproduction end operation such as pressing of the shutter button 61 is received. FIGS. 9A to 9C are diagrams showing examples of screens displayed on the display part 28 in FIG. 1B.

In FIGS. 8A and 8B, the system control part 50 reproduces an image file designated by the user from among image files stored in either the recording medium 200 or the recording medium 200' (S801). As a result, an image corresponding to the designated image file is displayed on the display part 28. Next, the system control part 50 determines whether or not an instruction to erase the designated image file has been received from the user (S802).

In a case where it is determined in S802 that the instruction to erase the image file has been received from the user, the reproduction processing proceeds to S803. In S803, the system control part 50 determines whether or not another image file associated with the designated image file has been generated by the shooting processing in S317. For example, in a case where the designated image file is an image file including the original comparison information, it is determined whether or not an image file that is associated with the designated image file and does not include the original comparison information is generated in the shooting processing of S317. The determination in S803 is made on the basis of, for example, the presence or absence of information associating the two image files, which is stored in the memory 32 in S523.

In a case where it is determined in S803 that another image file associated with the designated image file has not been generated by the shooting processing in S317, the reproduction processing proceeds to S804. In S804, the system control part 50 erases the image file being reproduced, that is, the designated image file, from the storage location thereof.

In a case where it is determined in S803 that another image file associated with the designated image file has been generated by the shooting processing in S317, the reproduction processing proceeds to S805. In S805, the system control part 50 determines whether or not the received erasure instruction is a "simultaneous erasure instruction".

For example, in a case where both the image file including the original comparison information and the image file not including the original comparison information are generated in the shooting processing of S317, the user selects one of the erasure buttons 901 to 903 on the screen displayed on the display part 28 shown in FIG. 9A, and issues the erasure instruction of the image file. The erasure button 901 is a button for giving an instruction (hereinafter, it is referred to as an "instruction to erase only an image file with original comparison information".) to erase the image file including the original comparison information. The erasure button 902 is a button for giving an instruction (hereinafter, it is referred to as an "instruction to erase only an image file without original comparison information".) to erase the image file not including the original comparison information. The erasure button 903 is a button for giving an instruction (hereinafter, it is referred to as a "simultaneous erasure instruction".) to erase both the image file including the original comparison information and the image file not including the original comparison information.

In a case where the user selects the erasure button 903, it is determined in S805 that the received erasure instruction is the "simultaneous erasure instruction". In this case, the system control part 50 erases both the designated image file and the image file associated with the designated image file, from the storage locations thereof. Specifically, the system control part 50 erases the image file including the original comparison information from the recording medium 200, and erases the image file not including the original comparison information from the recording medium 200' (S806). As a result, without selecting both the image file including the original comparison information and the image file not including the original comparison information, the user can easily erase both the image files from the storage locations thereof only by selecting one of the image files. Next, the reproduction processing proceeds to S810 described later.

Meanwhile, in a case where the user selects any one of the erasure buttons 901 and 902, it is determined in S805 that the received erasure instruction is not the "simultaneous erasure instruction". In this case, the system control part 50 determines whether or not the "instruction to erase only an image file with original comparison information" has been made (S807).

In a case where the user selects the erasure button 901, it is determined in S807 that the received erasure instruction is the "instruction to erase only an image file with original comparison information". In this case, the system control part 50 erases, from the recording medium 200, the image file including the original comparison information, among the designated image file and the image file associated with the designated image file (S808). Next, the reproduction processing proceeds to S810 described later.

Meanwhile, in a case where the user selects the erasure button 902, it is determined in S807 that the received erasure instruction is not the "instruction to erase only an image file with original comparison information". In this case, the system control part 50 erases, from the recording medium 200', the image file not including the original comparison information, among the designated image file and the image file associated with the designated image file (S809). Next, the reproduction processing proceeds to S810 described later.

In a case where it is determined in S802 that the instruction to erase the image file has not been received from the user, the reproduction processing proceeds to S810. In S810, the system control part 50 determines whether or not an "image protect instruction" has been received. In the present embodiment, the user can issue an image protect instruction by selecting protect button 904 on the screen displayed on the display part 28 shown in FIG. 9B.

In a case where it is determined in S810 that the image protect instruction has been received, the system control part 50 determines whether or not another image file associated with the designated image file has been generated by the shooting processing in S317 (S811).

In a case where it is determined in S811 that another image file associated with the designated image file has not been generated by the shooting processing in S317, the system control part 50 protects the image file being reproduced, that is, the designated image file (S812). Thereafter, the reproduction processing proceeds to S814 described later.

In a case where it is determined in S811 that another image file associated with the designated image file has been generated by the shooting processing in S317, the reproduction processing proceeds to S813. In S813, the system control part 50 protects the image file including the original comparison information among the designated image file and the image file associated with the designated image file. Thereafter, the reproduction processing proceeds to S814 described later.

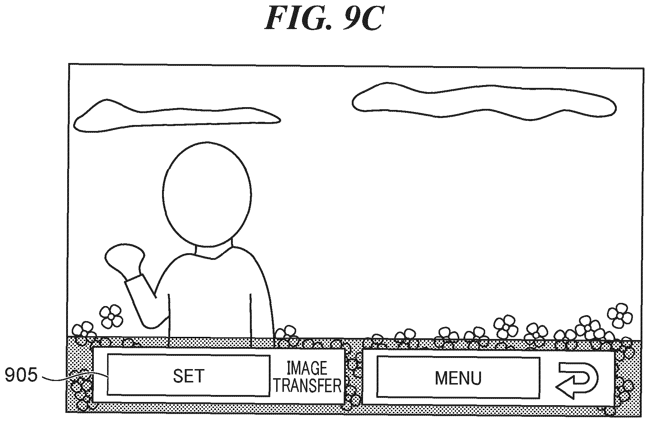

In a case where it is determined in S810 that the image protect instruction has not been received, the system control part 50 determines whether or not an "image transfer instruction" has been received (S814). Note that, in the present embodiment, the user can give an image transfer instruction by selecting an image transfer button 905 on the screen displayed on the display part 28 shown in FIG. 9C. In a case where it is determined in S814 that the image transfer instruction has not been received, the reproduction processing ends.

In a case where it is determined in S814 that the image transfer instruction has been received, the system control part 50 determines whether or not another image file associated with the designated image file has been generated by the shooting processing in S317 (S815).

In a case where it is determined in S815 that another image file associated with the designated image file has not been generated by the shooting processing in S317, the reproduction processing proceeds to S816. In S816, the system control part 50 transfers the image file being reproduced, that is, the designated image file, to a transfer destination designated by the user. Note that the user can designate an external device such as a smartphone, a PC, and a server as a transfer destination of the image file. Thereafter, the reproduction processing ends.

In a case where it is determined in S815 that another image file associated with the designated image file has been generated in the shooting processing in S317, the reproduction processing proceeds to S817. In S817, the system control part 50 transfers both the designated image file and the image file associated with the designated image file to the transfer destination designated by the user. Specifically, the system control part 50 transfers both the image file including the original comparison information and the image file not including the original comparison information to the transfer destination designated by the user. Note that, as a use case of transferring both the image file including the original comparison information and the image file not including the original comparison information to the external device, there is a case where these two image files have different uses. For example, in a case where an image file is disclosed to the public except for information desired to be kept private to the outside, an image file not including the original comparison information is used. Further, in a case where the image file is limitedly used internally, for example, so as to be able to compare and confirm the histories including information desired to be kept private to the outside, the image file including the original comparison information is used. Thereafter, the reproduction processing ends.

In the above-described embodiment, in a case where the erasure instruction is received from the user in a state where one of the image file including the original comparison information and the image file not including the original comparison information is selected, whether to erase both of these two image files or to erase only one of these two image files is controlled according to which one of the erasure buttons 901 to 903 is selected by the user. As a result, the user can realize the intended erasure processing only by selecting one of the image file including the original comparison information and the image file not including the original comparison information without selecting both of the image file including the original comparison information and the image file not including the original comparison information.

Further, in the above-described embodiment, in a case where an image protect instruction is received from the user in a state where one of the image file including the original comparison information and the image file not including the original comparison information is selected, control is made so that the image file including the original comparison information is to be protected. Therefore, the image file including the original comparison information, which has the larger information amount, can be prevented from being erased by the user's erroneous operation.

Note that when it is more useful to protect the image file not including the original comparison information, the image file not including the original comparison information may be protected instead of (or in addition to) the image file including the original comparison information.

Further, in the above-described embodiment, in a case where the image transfer instruction is received from the user in a state where one of the image file including the original comparison information and the image file not including the original comparison information is selected, both the image file including the original comparison information and the image file not including the original comparison information are transferred to the external device. As a result, the user can easily transfer the two image files to the external device only by selecting one of the image file including the original comparison information and the image file not including the original comparison information without selecting both of the image file including the original comparison information and the image file not including the original comparison information.

In the present embodiment, the image file including the original comparison information and the image file not including the original comparison information are transferred in the reproduction processing; however, a transfer timing of these image files is not limited to the time of the reproduction processing. For example, these image files may be transferred by automatic transfer processing of immediately transferring image files generated by shooting to an external device. In the automatic transfer processing, in a case where both the image file including the original comparison information and the image file not including the original comparison information are generated, these two image files are transferred to the external device. In a case where one of the image file including the original comparison information and the image file not including the original comparison information is generated, the generated image file is transferred to the external device.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A content generation apparatus (100) comprising:
one or more controllers (50) configured to function as:
a unit configured to generate a content (603a, 603b, 603c);
a unit configured to generate metadata including original comparison information for grasping a change from a generation time point of a content file including the content;
a unit configured to generate a hash value on a basis of the metadata including the original comparison information and of the content;
a unit configured to generate a first content file (600c) which includes the content, the metadata including the original comparison information, and the hash value; and
a unit configured to generate a second content file (600a, 600b) which includes the content and does not include the original comparison information.

2. The content generation apparatus (100) according to claim 1, wherein the one or more controllers (50) are further configured to function as:
a unit configured to, in a case where an instruction to perform predetermined processing is received from a user in a state where one of the first content file and the second content file is selected, control according to an operation content by the user whether to perform the predetermined processing on both the first content file and the second content file or to perform the predetermined processing on only one of the first content file and the second content file.

3. The content generation apparatus (100) according to claim 2, wherein the predetermined processing is processing of erasing a content file from a storage location.

4. The content generation apparatus (100) according to claim 1, wherein the one or more controllers (50) are further configured to function as:
a unit configured to control so as to perform predetermined processing on the first content file in a case where an instruction to perform the predetermined processing is received from a user in a state where one of the first content file and the second content file is selected.

5. The content generation apparatus (100) according to claim 4, wherein the predetermined processing is content file protection processing.

6. The content generation apparatus (100) according to claim 1, wherein the one or more controllers (50) are further configured to function as:
a unit configured to control so as to perform predetermined processing on both the first content file and the second content file in a case where an instruction to perform the predetermined processing is received from a user in a state where one of the first content file and the second content file is selected.

7. The content generation apparatus (100) according to claim 6, wherein the predetermined processing is processing of transferring the content file to an external device.

8. The content generation apparatus (100) according to any one of claims 1 to 7, wherein the first content file and the second content file are stored in different storage locations (200, 200').

9. The content generation apparatus (100) according to any one of claims 1 to 8, wherein
the content is image data obtained by shooting a subject, and
the original comparison information is at least one of a thumbnail image obtained by reducing image data generated by the unit configured to generate the content, and metadata at the time of shooting, which includes information indicating a shooting place.

10. The content generation apparatus (100) according to any one of claims 1 to 9, further comprising a memory (32), wherein
the one or more controllers (50) are further configured to function as:
a unit configured to record in the memory that the first content file and the second content file are data generated by the same shooting processing.

11. The content generation apparatus (100) according to any one of claims 1 to 10, wherein a file name of the second content file is a file name made by adding a predetermined character string indicating relevance to the first content file to a file name of the first content file.

12. The content generation apparatus (100) according to any one of claims 1 to 11, wherein
the second content file (600b) includes the content, metadata not including the original comparison information, and a hash value which is generated on a basis of the metadata not including the original comparison information and of the content, or wherein
the second content file (600a) includes the content, and does not include metadata not including the original comparison information, and does not include a hash value generated on a basis of metadata not including the original comparison information and of the content.

13. The content generation apparatus (100) according to claim 12, wherein on a basis of predetermined identification information included in the metadata including the original comparison information and of predetermined identification information included in the metadata not including the original comparison information, whether or not the content files having the said metadata are data generated by the same shooting processing is determined.

14. A control method of a content generation apparatus (100),
the control method comprising:
a step of generating a content (603a, 603b, 603c);
a step of generating metadata including original comparison information for grasping a change from a generation time point of a content file including the content;
a step of generating a hash value on a basis of the metadata including the original comparison information and of the content;
a step of generating a first content file (600c) which includes the content, the metadata including the original comparison information, and the hash value; and
a step of generating a second content file (600a, 600b) which includes the content and does not include the original comparison information.

15. A computer-readable non-transitory storage medium storing a program for executing a method for controlling a content generation apparatus (100), the control method comprising:
a step of generating a content (603a, 603b, 603c);
a step of generating metadata including original comparison information for grasping a change from a generation time point of a content file including the content;
a step of generating a hash value on a basis of the metadata including the original comparison information and of the content;
a step of generating a first content file (600c) which includes the content, the metadata including the original comparison information, and the hash value; and
a step of generating a second content file (600a, 600b) which includes the content and does not include the original comparison information.
